# EUROPEAN PATENT SPECIFICATION

(11) **EP 2 636 881 B1**
(45) Date of publication and mention of the grant of the patent: **09.05.2018**
(21) Application number: 11838065.8
(22) Date of filing: 02.11.2011
(51) Int. Cl.: F02M 61/18, B23K 15/00, F02M 61/16

(54) **INJECTION NOZZLE**
EINSPRITZDÜSE
BUSE D'INJECTION

(30) Priority: 05.11.2010 JP 2010248712
(43) Date of publication of application: 11.09.2013
(73) Proprietor: Kumamoto University, Kumamoto-shi Kumamoto 860-0862 (JP); Kuroki Kogyosho Co., Ltd., Yahatanishi-ku Kitakyusyu-shi Fukuoka 806-0012 (JP)
(72) Inventor: KAWAMURA, Yoshihito, Kumamoto-shi Kumamoto 860-0862 (JP); KIM, Jonghyun, Kumamoto-shi Kumamoto 860-0862 (JP); KUROKI, Hironori, Kitakyushu-shi Fukuoka 806-0012 (JP); YANAGIDA, Yuji, Kitakyushu-shi Fukuoka 806-0012 (JP); SAWAI, Naohisa, Kitakyushu-shi Fukuoka 806-0012 (JP); MIYAJIMA, Masafumi, Tokyo 150-8360 (JP)
(74) Representative: Vossius & Partner Patentanwälte Rechtsanwälte mbB
(86) International application number: PCT/JP2011/075304
(87) International publication number: WO 2012/060415

(56) References cited:
- WO-A1-2009/014221
- WO-A1-2009/014221
- DE-A1-102006 051 326
- JP-A- 2004 190 781
- JP-A- 2004 190 781
- JP-A- 2004 239 245
- JP-A- 2007 002 807
- JP-A- 2007 002 807
- JP-A- 2008 214 704
- JP-A- 2008 214 704

## Description

### TECHNICAL FIELD

The present invention relates to an injection nozzle for a high-pressure common rail system which is one type of fuel injection system for internal combustion engines such as diesel engines, and, more particularly, to an injection nozzle whose distal end is made of a metallic glass.

### BACKGROUND ART

Conventional internal combustion engines, particularly, direct injection diesel engines, suffered from low combustion efficiency because a fuel injection event was limited to once per combustion cycle.

Recent years, a new system having a potential to achieve complete combustion has been developed which comprises a pressurized compartment (pressure accumulator), wherein the pressurized compartment is preliminarily filled with high-pressure fuel gas, and a needle valve is opened and closed under electronic control to inject fuel into each cylinder plural times, e.g., 5 times, per combustion cycle, at appropriate timings and in appropriate amounts. This system is called "common rail system".

What is required to enhance performance of the common rail system is firstly to increase a fuel injection pressure, and secondly to ensure response performance of an injection nozzle under such an increased fuel injection pressure.

As for the increase in fuel injection pressure, while an internal pressure of the common rail system is currently in the range of 180 to 200 MPa, fuel droplets to be produced by injection can be more finely atomized and more completely combusted by further increasing the fuel injection pressure. Therefore, it is predicted that the increase in fuel injection pressure will progress up to the range of 250 to 300 MPa.

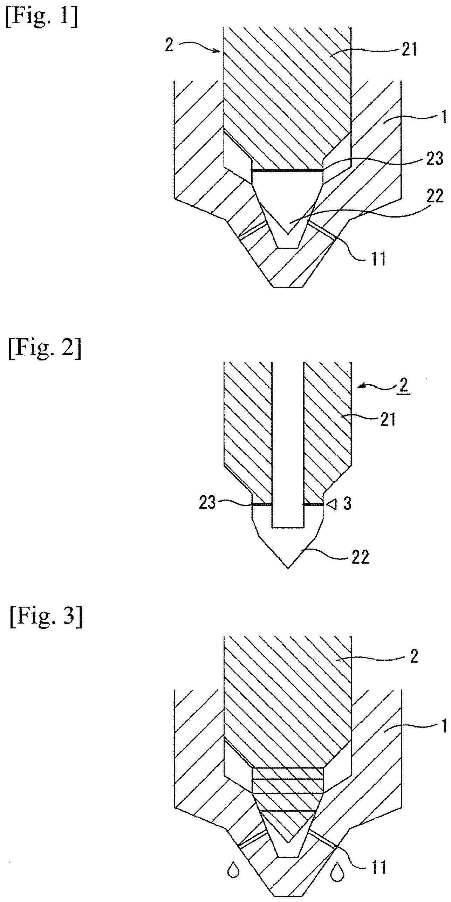

FIG. 3 is a sectional view illustrating a structure of a distal end of an injection nozzle for a high-pressure common rail diesel fuel injection system. In FIG. 3, the injection nozzle comprises a nozzle body 1, and a needle valve 2 disposed in an inner bore of the nozzle body 1 and adapted to be moved up and down under electronic control so as to open and close an injection port 11 of the nozzle body 1 to control injection of fuel gas.

In order to adequately maintain an operation of opening and closing the injection port 11, processing (machining, working, etc.) accuracy of a distal end of the nozzle body 1 and the needle valve 2 is increased, and the needle valve 2 is pressed against a valve seat portion of the nozzle body 1 by a higher pressure. By doing so, elastic deformation occurs to the needle valve 2, thereby maintaining sealing performance with respect to the injection port 11.

However, the distal end of the nozzle body and the needle valve are made of forged alloy steel. Thus, through long-term use, they undergo surface deterioration, which causes fuel leakage, resulting in failing to supply fuel at appropriate timings and in appropriate amounts, and hindering complete combustion of fuel. The increase in fuel injection pressure of the common rail system worsens the above problem, i.e., causes an increase in fuel leakage, which leads to a need for frequent replacement of the nozzle. An injection nozzle having a valve member with a distal end comprising metallic glass is shown in DE 10 2006 051326 A.

### LIST OF PRIOR ART DOCUMENTS

### [PATENT DOCUMENTS]

Patent Document 1: JP 2006-088201A
Patent Document 2: WO 2009/014221A

### SUMMARY OF THE INVENTION

### [TECHNICAL PROBLEM]

The present invention is directed to allowing an injection nozzle to maintain high response performance over a long period of time, in a manner compatible with an increase in fuel injection pressure of a high-pressure common rail system for internal combustion engines, particularly, diesel engines.

### [SOLUTION TO THE TECHNICAL PROBLEM]

In an injection nozzle comprising a valve body, and a needle valve disposed in an inner bore of the valve body and adapted to be moved up and down under electronic control so as to open and close an injection port of the nozzle body to spray fuel gas, the present invention achieves the above object by forming a distal end of the injection nozzle using a metallic glass.

As a metallic glass, it is possible to use a composition of (Zr₄₁Be₂₃Ti₁₄Cu₁₂Ni₁₀) or (Zr₅₅Al₁₀Ni₅Cu₃₀). A metallic glass has high strength, high elastic deformability and high abrasion resistance, as compared to forged alloy steel (SUS 316L) which has heretofore been used. Further, it has high corrosion resistance, and ultra-precision castability. Specifically, a stainless steel has tension strength of 650 MPa, whereas a metallic glass has tension strength of 1700 MPa. As for Young's modulus GPa, a stainless steel has a Young's modulus of 204 GPa, whereas a metallic glass has a Young's modulus of 86 MPa.

In the present invention, a metallic glass having such a low Young's modulus is applied to the distal end of the injection nozzle to allow the distal end of the injection nozzle to have like rubber elasticity, so that it becomes possible to satisfy both needs for increasing a fuel injection pressure, and ensuring high sealing performance, i.e., high response performance.

Thus, in the present invention, from the point of utilizing low Young's modulus as a property of a metallic glass, a gum metal or a titanium (Ti) alloy having a Young's modulus equivalent to that of a metallic glass may be applied to the distal end of the injection nozzle.

When a metallic glass is applied to the distal end of the injection nozzle, an entirety of the injection nozzle including the needle valve may be made of a metallic glass. However, from an economical standpoint, it is desirable that only a distal end of the needle valve is made of a metallic glass, and a base portion of the needle valve and the nozzle body are made of forged alloy steel such as SUS 316L. In this case, it is necessary to join the base portion (crystalline metal) and the distal end (glass metal) of the needle valve together. As for this joining, it is possible to employ a joining technique of forming a joint by high energy beam welding such as electron beam welding, using a groove having a partially cut-out space, as disclosed in the Patent Document 2.

Further, the welding may be performed while shifting a scanning line of a high energy beam toward the distal end (metallic glass), as disclosed in the Patent Documents 1 and 2. This makes it possible to suppress penetration of the crystalline metal to prevent deterioration in properties of the metallic glass due to penetration of the crystalline metal in a weld zone.

### [EFFECT OF THE INVENTION]

The present invention provides an injection nozzle capable of ensuring high response performance based on sealing performance maintainable even under a sealing load reduced to about 1/3 as compared to the conventional injection nozzle, enhanced abrasion resistance, and downsizing, in a manner compatible with an increase in fuel injection pressure, thereby allowing the injection nozzle to become free of a need for maintenance over a long period of time.

### BRIEF DESCRIPTION OF THE DRAWINGS

FIG. 1 is a sectional view illustrating a structure of a distal end of an injection nozzle according to an exemplary configuration not falling within the scope of the claimed subject-matter.
FIG. 2 is a sectional view illustrating a welded state between a base portion and a distal end of a needle valve of the injection according to the present invention.
FIG. 3 is a sectional view illustrating a structure of a distal end of a conventional injection nozzle.

### DESCRIPTION OF EMBODIMENTS

With reference to the drawings, the present invention will now be described based on an embodiment thereof.

FIG. 1 illustrates a structure of a distal end of a high-pressure common rail diesel injection nozzle according to an exemplary configuration not falling within the scope of the claimed subject-matter. As illustrated in FIG. 1, the injection nozzle comprises a valve body 1, and a needle valve 2 disposed in an inner bore of the valve body 1 and adapted to intermittently seal an injection port 11 of the nozzle body 1. The needle valve 2 has a distal end 22 made of a metallic glass.

FIG. 2 illustrates a state in which a base portion 21 of the needle valve 2 made of SUS 316L is butted against a joint surface of the preformed metallic glass distal end 22, and welded to the joint surface by a high energy beam 3.

In advance of the welding, a cut-out space (welding groove) is formed on an outer peripheral surface of the base portion 21 of the needle valve 2 to extend from a butted surface (joint surface) toward the base portion 21. Then, the welding was performed while shifting an irradiation position of a high energy beam 3 in a direction from the butted surface toward the distal end 22.

In this manner, the needle 2 was obtained as a structure where the distal end 22 made of a metallic glass and the base portion 21 made of a crystalline metal are integrated together by a weld zone 23, as illustrated in FIG. 2.

### INDUSTRIAL APPLICABILITY

The present invention can contribute to development of a maintenance-free, high pressure compatible, high-performance fuel injection system, and an injection nozzle for use therein.

Through development of the high-performance fuel injection system, it becomes possible to meet the exhaust emission regulations for diesel-powered vehicles in Japan, and contribute to popularization of diesel-electric hybrid vehicles.

### EXPLANATION OF CODES

1: nozzle body
11: injection port
2: needle valve
21: base portion
22: distal end
23: weld zone
3: high energy beam

## Claims

1. An injection nozzle comprising a valve body (1), and a needle valve (2) disposed in an inner bore of the valve body and adapted to be moved up and down under electronic control so as to open and close an injection port (11) of the nozzle body to control injection of fuel gas, wherein a base portion (21) of the needle valve comprises a crystalline metal, and a hollow portion is formed in a distal end side thereof; a distal end (22) of the needle valve comprises a metallic glass, **characterised in that** depression portion having the same diameter as the hollow portion is formed in a base portion side thereof; and the needle valve is a joint body having the base portion thereof welded to the distal end thereof by beam irradiation.

2. The injection nozzle as defined in claim 1, wherein the metallic glass consists of a Zr-based metallic glass having a composition of (Zr₄₁Be₂₃Ti₁₄Cu₁₂Ni₁₀) or (Zr₅₅Al₁₀Ni₅Cu₃₀).

3. The injection nozzle as defined in claim 1, wherein the distal end is joined to the base portion by groove welding (23, 3).

4. The injection nozzle as defined in claim 3, wherein the groove welding is performed while forming a welding groove (23, 3) on an outer peripheral surface of the base portion, and shifting an irradiation position toward the distal end.

## Patentansprüche

1. Einspritzdüse, die einen Ventilkörper (1) und ein Nadelventil (2) aufweist, das in einer Innenbohrung des Ventilkörpers angeordnet und eingerichtet ist, unter elektronischer Steuerung auf- und abbewegt zu werden, um eine Einspritzöffnung (11) des Düsenkörpers zu öffnen und zu schließen, um die Einspritzung von Brenngas zu steuern, wobei ein Basisabschnitt (21) des Nadelventils ein kristallines Metall aufweist und ein hohler Abschnitt in dessen distaler Endseite ausgebildet ist;
ein distales Ende (22) des Nadelventils ein amorphes Metall aufweist, **dadurch gekennzeichnet, dass** ein Vertiefungsabschnitt, der denselben Durchmesser wie der hohle Abschnitt aufweist, in dessen Basisabschnittseite ausgebildet ist; und
das Nadelventil ein verbundener Körper ist, dessen Basisabschnitt durch Bestrahlung an dessen distales Ende geschweißt ist.

2. Einspritzdüse nach Anspruch 1, wobei das amorphe Metall aus einem Zr-basierten amorphen Metall besteht, das eine Zusammensetzung von (Zr₄₁Be₂₃Ti₁₄Cu₁₂Ni₁₀) oder (Zr₅₅Al₁₀Ni₅Cu₃₀) aufweist.

3. Einspritzdüse nach Anspruch 1, wobei das distale Ende mit dem Basisabschnitt durch Nutschweißung (23, 3) verbunden ist.

4. Einspritzdüse nach Anspruch 3, wobei die Nutschweißung durchgeführt wird, während eine Schweißnut (23, 3) an einer Außenumfangsfläche des Basisabschnitts gebildet wird und eine Bestrahlungsposition zum distalen Ende verschoben wird.

## Revendications

1. Injecteur comprenant un corps de soupape (1), et une soupape à pointeau (2) disposée dans un alésage intérieur du corps de soupape et prévue pour être déplacée vers le haut et le bas par commande électronique de manière à ouvrir et fermer un orifice d'injection (11) du corps d'injecteur pour commander l'injection de carburant, où
une partie de base (21) de la soupape à pointeau comprend un métal cristallin, et une partie creuse est formée sur un côté d'extrémité distale de celle-ci ;
une extrémité distale (22) de la soupape à pointeau comprend un verre métallique, **caractérisé**
**en ce qu'**une partie évidée ayant le même diamètre que la partie creuse est formée sur un côté de sa partie de base ; et
la soupape à pointeau est un corps d'assemblage dont la partie de base est soudée à son extrémité distale par irradiation en faisceau.

2. Injecteur selon la revendication 1, où le verre métallique est un verre métallique à base de Zr avec une composition (Zr₄₁Be₂₃Ti₁₄Cu₁₂Ni₁₀) ou (Zr₅₅Al₁₀Ni₅Cu₃₀).

3. Injecteur selon la revendication 1, où l'extrémité distale est assemblée à la partie de base par soudage à rainure (23, 3).

4. Injecteur selon la revendication 3, où le soudage à rainure est exécuté en formant une rainure de soudage (23, 3) sur une surface périphérique extérieure de la partie de base, et le déplacement d'une position d'irradiation vers l'extrémité distale.
